# EUROPÄISCHE PATENTANMELDUNG

(11) **EP 3 646 840 A1**
(43) Veröffentlichungstag der Anmeldung: **06.05.2020**
(21) Anmeldenummer: 18204425.5
(22) Anmeldetag: 05.11.2018
(51) Int. Cl.: A61G 12/00, A61G 13/10

(54) **VERSORGUNGSVORRICHTUNG ZUM BEREITSTELLEN ZUMINDEST EINES VERSORGUNGSPRODUKTS**

(71) Anmelder: Ondal Medical Systems GmbH, 36088 Hünfeld (DE)
(72) Erfinder: Abel, Markus, 36037 Fulda (DE); Kiel, Hartmuth, 36151 Burghaun (DE); Oginski, Stefan, 36041 Fulda (DE); Perplies, Stefan, 36088 Hünfeld (DE)
(74) Vertreter: Graf von Stosch Patentanwaltsgesellschaft mbH

(57) **Zusammenfassung**

Die vorliegende Erfindung betrifft eine Versorgungsvorrichtung (1) zum Bereitstellen zumindest eines Versorgungsprodukts, umfassend eine Montageeinheit (2) zum Montieren der Versorgungsvorrichtung an eine Abstützung, bevorzugt eine Decke eines Raumes, und einen Auslegerarm (3), wobei der Auslegerarm (3) relativ zur Montageeinheit (2) um eine vertikale Schwenkachse (30) schwenkbar angeordnet ist. Der Auslegerarm (3) weist ferner zumindest einen direkt in dem Auslegerarm (3) integrierten Anschluss (4, 4', 4") für ein Versorgungsprodukt auf.

## Beschreibung

### Technisches Gebiet

Die vorliegende Erfindung betrifft eine Versorgungsvorrichtung zum Bereitstellen zumindest eines Versorgungsprodukts.

### Stand der Technik

Es ist bekannt, in medizinischen Einrichtungen, beispielsweise Kliniken, Krankenhäusern, Arztpraxen und vergleichbaren Einrichtungen, in einem Behandlungsraum etwaige benötigte Versorgungsprodukte wie elektrischen Strom, Daten oder medizinische Gase über eine Versorgungseinheit bereitzustellen.

Bekannte Versorgungseinheiten sind dabei mit einer Tragvorrichtung zu einem System kombiniert. Die Tragvorrichtung weist in der Regel einen Auslegerarm auf, welcher gegenüber einer an einer Decke des Behandlungsraums angeordneten Montageeinheit über mindestens eine Schwenkachse herum schwenkbar angeordnet ist. Die eigentliche Versorgungseinheit ist mit dem Auslegerarm über eine Schnittstelle verbunden beziehungsweise an diesen angekoppelt. Die Tragvorrichtung stellt mithin die Schnittstelle zur Decke dar und legt den möglichen Bewegungsbereich und Bewegungsradius fest, die Versorgungseinheit stellt wiederum die Versorgung mit elektrischem Strom, Daten und medizinischen Gasen bereit.

Bei den bekannten Kombinationen ist mithin stets eine Schnittstelle vonnöten, welche beide Teilsysteme, die Tragvorrichtung und die Versorgungseinheit, miteinander verbindet. Bei diesem Aufbau sind eine große Anzahl von Bauteilen und dementsprechend eine große Anzahl von Montageschritten zur Verbindung der Tragvorrichtung und der Versorgungseinheit nötig. Zudem liegen dadurch an den Verbindungsstellen zwischen Tragvorrichtung und Versorgungseinheit Fugen vor, welche eine Desinfektion des Systems aus Tragvorrichtung und Versorgungseinheit erschweren.

### Darstellung der Erfindung

Ausgehend von dem bekannten Stand der Technik ist es eine Aufgabe der vorliegenden Erfindung, eine verbesserte Versorgungsvorrichtung zum Bereitstellen zumindest eines Versorgungsprodukts bereitzustellen.

Die Aufgabe wird durch eine Versorgungsvorrichtung zum Bereitstellen zumindest eines Versorgungsprodukts mit den Merkmalen des Anspruchs 1 gelöst. Vorteilhafte Weiterbildungen ergeben sich aus den Unteransprüchen, der Beschreibung und den Figuren.

Entsprechend wird eine Versorgungsvorrichtung zum Bereitstellen zumindest eines Versorgungsprodukts vorgeschlagen, umfassend eine Montageeinheit zum Montieren der Vorrichtung an eine Abstützung, bevorzugt eine Decke eines Raumes, und einen Auslegerarm, wobei der Auslegerarm relativ zur Montageeinheit um eine vertikale Schwenkachse schwenkbar angeordnet ist. Erfindungsgemäß weist der Auslegerarm zumindest einen direkt in dem Auslegerarm integrierten Anschluss für ein Versorgungsprodukt auf.

Dadurch, dass der Auslegerarm zumindest einen direkt in dem Auslegerarm integrierten Anschluss für ein Versorgungsprodukt aufweist, kann auf eine separate, an den Auslegerarm anzubringende Versorgungseinheit zum Bereitstellen des Versorgungsprodukts verzichtet werden. Hierdurch kann zum einen im Vergleich zu herkömmlichen Versorgungsvorrichtungen eine schlankere Bauform erzielt werden. Zudem ergibt sich ein einfacherer Aufbau, da auch die Bauteile, welche zum Verbinden des Auslegerarms und der ansonsten benötigten Versorgungseinheit notwendig wären, entfallen. Aufgrund des reduzierten Material- und Teilebedarfs lassen sich der Montageaufwand und die Herstellkosten reduzieren.

Durch die Integration des mindestens einen Anschlusses in den Auslegerarm kann zudem eine größere Durchgangshöhe für eine Person, beispielsweise medizinisches Personal, bereitgestellt werden, als dies bei Versorgungsvorrichtungen mit separater Versorgungseinheit der Fall ist. Zudem ist der benötigte Platzbedarf der Versorgungsvorrichtung gegenüber herkömmlichen Vorrichtungen reduziert.

Aufgrund des Fehlens der Fugen an den Verbindungstellen zwischen dem Auslegerarm und der nicht benötigten Versorgungseinheit kann auch eine Reinigung, insbesondere eine Desinfektion, der Versorgungsvorrichtung vereinfacht werden. Zudem ist dadurch ein Absetzen und/oder Ansiedeln von Keimen an der Versorgungsvorrichtung erschwert. Folglich lassen sich die hygienischen Bedingungen insgesamt verbessern.

Unter "vertikal" wird hier insbesondere eine Ausrichtung parallel zur Gravitationsrichtung verstanden.

Gemäß einer bevorzugen Ausführungsform ist eine Mehrzahl von Anschlüssen in den Auslegerarm integriert. Somit kann durch den Auslegerarm eine Vielzahl oder gar alle der benötigten Produkte bereitgestellt werden.

Bevorzugt ist zumindest ein Anschluss an einer Seite des Auslegerarms und/oder einer Unterseite des Auslegerarms angeordnet. Dadurch lassen sich die Variabilität der Versorgungsvorrichtung und die Erreichbarkeit der einzelnen Anschlüsse verbessern.

Gemäß einer weiter bevorzugten Ausführungsform ist ein Anschluss als Anschluss für elektrischen Strom, als Anschluss für digitale und/oder analoge Daten und/oder als Anschluss für ein medizinisches Gas ausgebildet, wobei ein Anschluss für ein medizinisches Gas, bevorzugt zum Bereitstellen von Sauerstoff (O₂), medizinische Luft, sogenannter "Aer medicalis", Kohlenstoffdioxid (CO₂), Lachgas (N₂O), Xenon (Xe), Stickstoffmonoxid (NO), Helium (He), Stickstoff (N₂), Kohlenmonoxid (CO) und/oder Schwefelwasserstoff (H₂S) ausgebildet ist. Dadurch ist es möglich, nahezu alle oder gar alle benötigten Versorgungsprodukte durch die Versorgungsvorrichtung bereitzustellen.

Wenn der Auslegerarm einen Bediengriff zum Positionieren des Auslegerarms aufweist, kann eine Person, beispielsweise medizinisches Personal, die Position des Auslegerarms durch Betätigen des Bediengriffs in einfacher Weise verändern. In einer bevorzugten Weiterführung weist der Bediengriff mindestens ein Betätigungselement auf, durch welches eine elektrische, magnetische, hydraulische, pneumatische oder andersgeartete Unterstützung zum Positionieren des Auslegerarms aktiviert und/oder deaktiviert werden kann.

Gemäß einer weiter bevorzugten Ausführungsform ist der Bediengriff derart ausgebildet, dass mindestens eine Leitung und/oder mindestens ein Schlauch an den Bediengriff angebracht werden kann, bevorzugt eingehängt werden kann. Dadurch ist es möglich, eine Zugentlastung für eine Steckverbindung zwischen dem Ende des Schlauches oder der Leitung und einem Anschluss bereitzustellen.

Um eine größere Variabilität der Versorgungsvorrichtung zusätzlich bereitstellen zu können, kann der Auslegerarm relativ zur Montageeinheit ferner um eine horizontale Schwenkachse zumindest innerhalb eines vorgegebenen Winkelbereichs schwenkbar sein.

Unter "horizontal" wird hier insbesondere eine Ausrichtung senkrecht zur vertikalen Schwenkachse verstanden.

Gemäß einer weiter bevorzugten Ausführungsform ist eine Position des Auslegerarms relativ zur vertikalen Schwenkachse und/oder zur horizontalen Schwenkachse durch Reibung, Magnetismus und/oder Pneumatik fixierbar. Dadurch kann sichergestellt werden, dass der Auslegerarm sicher in seiner durch eine Person eingestellten Stellung bzw. Position verbleibt. So kann verhindert werden, dass es aufgrund einer ungewollten und unvorhergesehenen Bewegung des Auslegerarms zu Beschädigungen von Gegenständen oder Verletzungen von Personen kommt.

Um eine Verstellung der Position des Auslegerarms relativ zur vertikalen Schwenkachse und/oder zur horizontalen Schwenkachse zu unterstützen, kann eine Motoreinheit, bevorzugt eine einen Elektromotor aufweisende Motoreinheit, zum Unterstützen einer Verstellung der Position des Auslegerarms relativ zur vertikalen Schwenkachse und/oder zur horizontalen Schwenkachse in die Vorrichtung integriert sein.

Alternativ oder zusätzlich kann auch ein Federschwenkstativ zum Unterstützen einer Verstellung der Position des Auslegerarms relativ zur vertikalen Schwenkachse und/oder zur horizontalen Schwenkachse in die Vorrichtung integriert sein.

Gemäß einer weiter bevorzugten Ausführungsform ist der Auslegerarm als Strangpressprofil, bevorzugt als Aluminium-Strangpressprofil, ausgebildet und/oder ist zumindest ein Anschluss auswechselbar und/oder modular ausgebildet. Dadurch ist es möglich, den Auslegerarm in einfacher Weise in verschiedenen Längen bereitzustellen, und die Versorgungsvorrichtung bedarfsgerecht an eine jeweilige Einsatzsituation anzupassen.

Wenn in dem Auslegerarm eine bauliche Trennung von elektrischen Bauteilen, insbesondere ein Anschluss für elektrischen Strom und/oder ein Anschluss für digitale und/oder analoge Daten, und ggf. Anschlüsse für medizinische Gase vorgesehen ist/sind, kann eine besonders sicher ausgebildete Versorgungsvorrichtung bereitgestellt werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht einer Versorgungsvorrichtung zum Bereitstellen zumindest eines Versorgungsprodukts gemäß einer ersten Ausführungsform;
- Figur 2: schematisch eine perspektivische Seitenansicht einer Versorgungsvorrichtung zum Bereitstellen zumindest eines Versorgungsprodukts gemäß einer weiteren Ausführungsform; und
- Figur 3: schematisch die Versorgungsvorrichtung aus Figur 2 in einer weiteren perspektivischen Seitenansicht.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

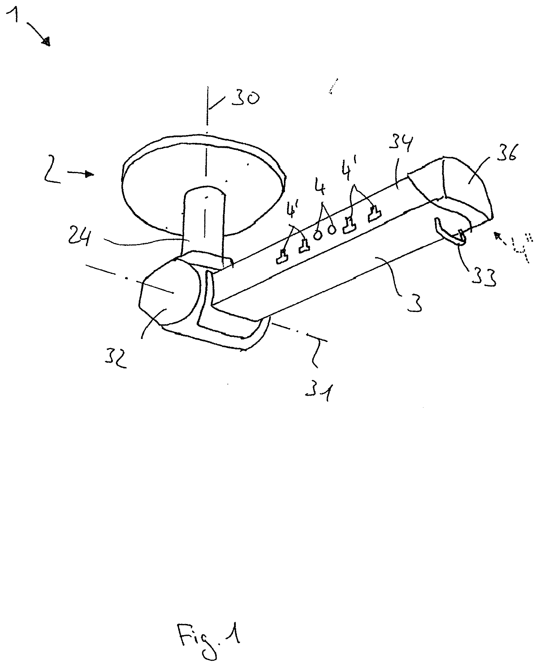

In Figur 1 ist schematisch eine perspektivische Seitenansicht einer Versorgungsvorrichtung 1 zum Bereitstellen zumindest eines Versorgungsprodukts gemäß einer ersten Ausführungsform gezeigt. Die Versorgungsvorrichtung 1 zum Bereitstellen zumindest eines Versorgungsprodukts 1 umfasst eine Montageeinheit 2 zum Montieren der Versorgungsvorrichtung an eine Abstützung, bevorzugt eine Decke eines Raumes, und einen Auslegerarm 3, wobei der Auslegerarm 3 relativ zur Montageeinheit 2 um eine vertikale Schwenkachse 30 schwenkbar angeordnet ist. Der Auslegerarm 3 weist eine Mehrzahl von direkt in den Auslegerarm 3 integrierten Anschlüsse 4, 4', 4" für ein Versorgungsprodukt auf, welche auf beiden Seiten 34 des Auslegerarms 3 vorgesehen sind.

Dabei sind Anschlüsse 4 für elektrischen Strom und Anschlüsse 4' für digitale und/oder analoge Daten auf der hier sichtbaren Seite 34 vorgesehen. Auf der der hier sichtbaren Seite 34 gegenüberliegenden Seite des Auslegerarms 3 sind ferner eine Mehrzahl von Anschlüssen 4" für ein medizinisches Gas ausgebildet ist, wobei jeweils ein Anschluss 4" für ein medizinisches Gas zum Bereitstellen von Sauerstoff O₂, medizinischer Luft, Kohlenstoffdioxid CO₂, Lachgas N₂O, Xenon Xe, Stickstoffmonoxid NO, Helium He, und Stickstoff N₂ ausgebildet ist. Fernerhin können Anschlüsse 4" zum Bereitstellen von Kohlenmonoxid CO und/oder Schwefelwasserstoff H₂S ausgebildet sein.

Der Auslegerarm 3 weist ferner einen Bediengriff 33 zum Positionieren des Auslegerarms 3 auf, welcher derart ausgebildet ist, dass mindestens eine Leitung und/oder mindestens ein Schlauch an den Bediengriff 33 angebracht werden kann, insbesondere eingehängt werden kann.

In der vorliegenden Ausführungsform ist der Auslegerarm 3 relativ zur Montageeinheit 2 ferner um eine horizontale Schwenkachse 31 zumindest innerhalb eines vorgegebenen Winkelbereichs schwenkbar. Der Winkelbereich erstreckt sich hier zwischen einer Ausrichtung des Auslegerarms 3 senkrecht zur vertikalen Schwenkachse 30 in Gravitationsrichtung bis zu einem Winkel von 45° bezogen auf die Ausrichtung des Auslegerarms 3 senkrecht zur vertikalen Schwenkachse 30. Alternativ können auch andere Winkel für den Bereich vorgegeben werden, beispielsweise 15°, 30° oder 60°.

Der Auslegerarm 3 ist von der Montageeinheit 2 durch eine Säule 24 beabstandet. Der Auslegerarm 3 weist eine Gelenkeinheit 32 auf, in welcher eine erste gelenkige Lagerung zur Bereitstellung der Schwenkbarkeit des Auslegerarms 3 um die vertikale Schwenkachse 30, sowie eine zweite gelenkige Lagerung zum Bereitstellen der Schwenkbarkeit des Auslegerarms 3 um die horizontale Schwenkachse 31 integriert ist.

In der Gelenkeinheit 32 ist ferner eine Reibungsanordnung integriert, durch welche eine Position des Auslegerarms 3 relativ zur vertikalen Schwenkachse 30 mittels Reibung fixierbar ist.

Alternativ oder zusätzlich kann in der Gelenkeinheit 32 ferner eine Anordnung integriert sein, durch welche eine Position des Auslegerarms 3 relativ zur horizontalen Schwenkachse 31 und/oder zur vertikalen Schwenkachse 30 durch Reibung, Magnetismus und/oder Pneumatik fixierbar ist.

Optional kann ferner eine Motoreinheit, bevorzugt eine einen Elektromotor aufweisende Motoreinheit, zum Unterstützen einer Verstellung der Position des Auslegerarms 3 relativ zur vertikalen Schwenkachse 30 und/oder zur horizontalen Schwenkachse 31 in die Versorgungsvorrichtung 1 integriert sein, bevorzugt in der Gelenkeinheit 32.

Vorliegend ist in der Gelenkeinheit 32 ferner ein Federschwenkstativ zum Unterstützen einer Verstellung der Position des Auslegerarms 3 relativ zur horizontalen Schwenkachse 31 in die Versorgungsvorrichtung integriert.

Der Auslegerarm 3 ist als Aluminium-Strangpressprofil ausgebildet, an dessem Ende eine Endabdeckung 36 angeordnet ist.

Um die Sicherheit zu erhöhen, ist in dem Auslegerarm 3 eine bauliche Trennung von elektrischen Bauteilen, insbesondere den Anschlüssen 4 für elektrischen Strom und den 4' Anschlüssen für digitale und/oder analoge Daten, und den Anschlüssen 4" für medizinische Gase vorgesehen.

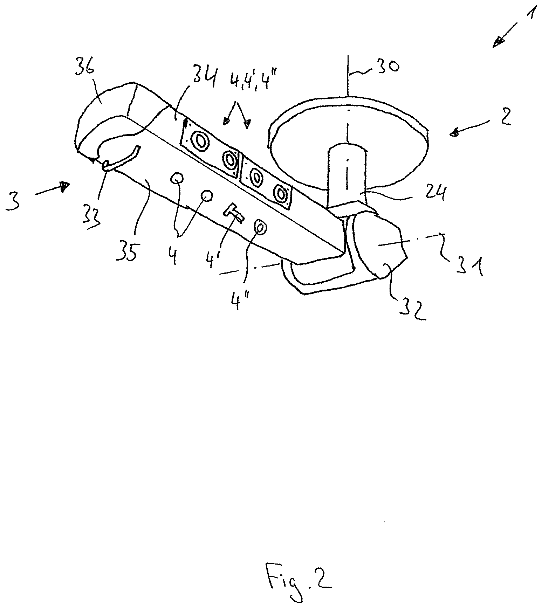

Figur 2 zeigt schematisch eine perspektivische Seitenansicht einer Versorgungsvorrichtung 1 zum Bereitstellen zumindest eines Versorgungsprodukts gemäß einer weiteren Ausführungsform.

Die Versorgungsvorrichtung 1 entspricht im Wesentlichen der in Figur 1 gezeigten. Sie weist jedoch zusätzlich an ihrer Unterseite 35 Anschlüsse 4, 4' auf.

Zudem sind die Anschlüsse 4, 4', 4" an den Seiten 34 modular auswechselbar ausgebildet.

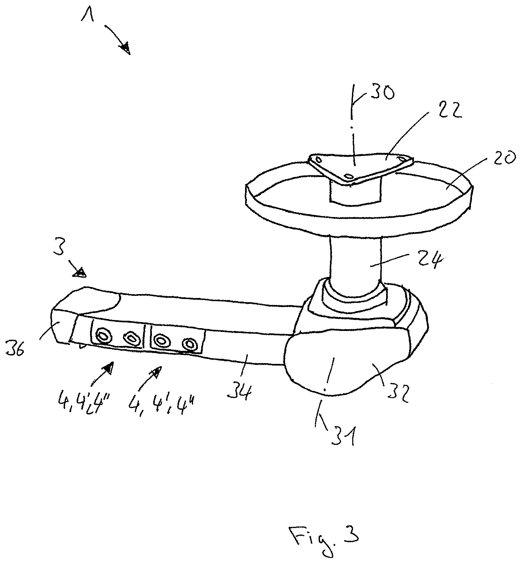

Figur 3 zeigt schematisch die Versorgungsvorrichtung 1 aus Figur 2 in einer weiteren perspektivischen Seitenansicht. Deutlich zu erkennen ist hier, dass die Montageeinheit 2 einen Flansch 22 zum tragenden Fixieren der Versorgungsvorrichtung 1 an einer Decke eines mit der Versorgungsvorrichtung 1 auszustattenden Raumes aufweist. Zur Verbesserung der Hygiene kann der Flansch 22 durch eine entlang der vertikalen Schwenkachse 30 verschiebbaren Abdeckplatte 20 abgedeckt werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Versorgungsvorrichtung
- 2: Montageeinheit
- 20: Abdeckplatte
- 22: Flansch
- 24: Säule
- 3: Auslegerarm
- 30: vertikale Schwenkachse
- 31: horizontale Schwenkachse
- 32: Gelenkeinheit
- 33: Bediengriff
- 34: Seite
- 35: Unterseite
- 36: Endabdeckung
- 4: Anschluss für elektrischen Strom
- 4': Anschluss für digitale und/oder analoge Daten
- 4": Anschluss für ein medizinisches Gas

## Patentansprüche

1. Versorgungsvorrichtung (1) zum Bereitstellen zumindest eines Versorgungsprodukts, umfassend
eine Montageeinheit (2) zum Montieren der Versorgungsvorrichtung (1) an eine Abstützung, bevorzugt eine Decke eines Raumes, und
einen Auslegerarm (3), wobei der Auslegerarm (3) relativ zur Montageeinheit (2) um eine vertikale Schwenkachse (30) schwenkbar angeordnet ist,
**dadurch gekennzeichnet, dass**
der Auslegerarm (3) zumindest einen direkt in den Auslegerarm (3) integrierten Anschluss (4, 4', 4") für ein Versorgungsprodukt aufweist.

2. Vorrichtung (1) gemäß Anspruch 1, **dadurch gekennzeichnet, dass** eine Mehrzahl von Anschlüssen (4, 4', 4" in den Auslegerarm (3) integriert ist und/oder zumindest ein Anschluss (4, 4', 4") an einer Seite (34) des Auslegerarms (3) und/oder einer Unterseite (35) des Auslegerarms (3) angeordnet ist.

3. Vorrichtung (1) gemäß einem der vorstehenden Ansprüche, **dadurch gekennzeichnet, dass** ein Anschluss (4, 4', 4") als Anschluss (4) für elektrischen Strom, als Anschluss (4') für digitale und/oder analoge Daten und/oder als Anschluss (4") für ein medizinisches Gas ausgebildet ist, wobei ein Anschluss (4") für ein medizinisches Gas bevorzugt zum Bereitstellen von Sauerstoff (O₂), medizinische Luft, Kohlenstoffdioxid (CO₂), Lachgas (N₂O), Xenon (Xe), Stickstoffmonoxid (NO), Helium (He), Stickstoff (N2), Kohlenmonoxid (CO) und/oder Schwefelwasserstoff (H₂S) ausgebildet ist.

4. Vorrichtung (1) gemäß einem der vorstehenden Ansprüche, **dadurch gekennzeichnet, dass** der Auslegerarm (3) einen Bediengriff (33) zum Positionieren des Auslegerarms (3) aufweist.

5. Vorrichtung (1) gemäß Anspruch 4, **dadurch gekennzeichnet, dass** der Bediengriff (33) derart ausgebildet ist, dass mindestens eine Leitung und/oder mindestens ein Schlauch an den Bediengriff (33) angebracht werden kann, bevorzugt eingehängt werden kann.

6. Vorrichtung (1) gemäß einem der vorstehenden Ansprüche, **dadurch gekennzeichnet, dass** der Auslegerarm (3) relativ zur Montageeinheit (2) ferner um eine horizontale Schwenkachse (31) zumindest innerhalb eines vorgegebenen Winkelbereichs schwenkbar ist.

7. Vorrichtung (1) gemäß einem der vorstehenden Ansprüche, **dadurch gekennzeichnet, dass** eine Position des Auslegerarms (3) relativ zur vertikalen Schwenkachse (30) und/oder zur horizontalen Schwenkachse (31) durch Reibung, Magnetismus und/oder Pneumatik fixierbar ist.

8. Vorrichtung (1) gemäß einem der vorstehenden Ansprüche, **dadurch gekennzeichnet, dass** eine Motoreinheit, bevorzugt eine einen Elektromotor aufweisende Motoreinheit, zum Unterstützen einer Verstellung der Position des Auslegerarms (3) relativ zur vertikalen Schwenkachse (30) und/oder zur horizontalen Schwenkachse (31) in die Versorgungsvorrichtung (1) integriert ist, und/oder ein Federschwenkstativ zum Unterstützen einer Verstellung der Position des Auslegerarms (3) relativ zur vertikalen Schwenkachse (30) und/oder zur horizontalen Schwenkachse (31) in die Versorgungsvorrichtung integriert ist.

9. Vorrichtung (1) gemäß einem der vorstehenden Ansprüche, **dadurch gekennzeichnet, dass** der Auslegerarm (3) als Strangpressprofil, bevorzugt als Aluminium-Strangpressprofil, ausgebildet ist und/oder zumindest ein Anschluss (4, 4', 4") auswechselbar und/oder modular ausgebildet ist.

10. Vorrichtung (1) gemäß einem der vorstehenden Ansprüche, **dadurch gekennzeichnet, dass** in dem Auslegerarm eine bauliche Trennung von elektrischen Bauteilen, insbesondere ein Anschluss (4) für elektrischen Strom und/oder ein (4') Anschluss für digitale und/oder analoge Daten, und den Anschlüssen (4") für medizinische Gase vorgesehen ist.
